# EUROPEAN PATENT SPECIFICATION

(11) **EP 3 274 946 B1**
(45) Date of publication and mention of the grant of the patent: **26.05.2021**
(21) Application number: 16708671.9
(22) Date of filing: 08.03.2016
(51) Int. Cl.: G06Q 20/40, G06F 21/34

(54) **A METHOD TO VALIDATE A DYNAMIC SECURITY CODE IN A PAYMENT TRANSACTION**
VERFAHREN ZUR VALIDIERUNG EINES DYNAMISCHEN SICHERHEITSCODES FÜR BANKGESCHÄFTE
PROCÉDÉ PERMETTANT DE VALIDER UN CODE DE SÉCURITÉ DYNAMIQUE DANS UNE TRANSACTION BANCAIRE

(30) Priority: 26.03.2015 EP 15305449
(43) Date of publication of application: 31.01.2018
(73) Proprietor: Thales Dis France SA, 92190 Meudon (FR)
(72) Inventor: WILSON, Angus, 92190 Meudon (FR); ELIASSON, Andreas, 92190 Meudon (FR)
(74) Representative: Cassagne, Philippe M.J.
(86) International application number: PCT/EP2016/054918
(87) International publication number: WO 2016/150696

(56) References cited:
- EP-A2- 2 787 474
- US-A1- 2014 344 153
- Anonymous: "Transaction authentication number - Wikipedia, the free encyclopedia", , 13 March 2015 (2015-03-13), XP055198196, Retrieved from the Internet: URL:https://en.wikipedia.org/w/index.php?t itle=Transaction_authentication_number&old id=651206307 [retrieved on 2015-06-24]

## Description

The present invention relates to a method to validate a dynamic security code and more generally to the field of electronic transactions, for example using a payment card for use with an electronic payment system.

### BACKGROUND OF THE INVENTION

There is a constant battle to mitigate credit card fraud. It is known that among the protection methods, there is a use of diverse codes for validating the transaction. The transaction is typically a payment, and in such case, it is known that a Card Security Code (CSC), or similar in readable form on the card, which is the case both on magnetic stripe cards and on Europay Mastercard Visa (EMV) cards.

These types of codes are used through telephone, mail, fax or the Internet to authenticate the user and establish that the user actually possesses the card. The CSC is in most cases written on the back of the card, and is composed of three or four digits. This information is in addition to other information related to the Personal Identification Number (PIN) and card number of the card. The CSC is also known as Card Code Verification (CCV), Card Verification Value Code (CVVC), Card Verification Value (CVV, CVV2), Verification Code (V-Code, V Code) or Card Verification Code (CVC).

The security of authenticating a transaction through the CSC has its limitations, as it only proves that the one presenting the CSC has had access to the card at some point, or seen a record of the CSC which has previously been made. On the other hand, it does not show that the person is in possession of the card at the time that the CSC is presented.

Banks are therefore looking to authenticate online payments more reliable by using a code that changes regularly, and therefore is not subject to recording and later use.

There are several schemes for allowing this, especially if the payment is made across the Internet, by requiring a One Time Password to be entered to authenticate the transaction, also called Dynamic Security Code (DSC). One such scheme is the use of Dynamic CVV which provides a CSC which is changing regularly or between each transaction, thereby mitigating the risk that a record is made of the CSC which can later be used by another person than the owner of the card.

The most common DSC generation methods in use today achieve the property where the DSC is changing at regular intervals or for each transaction through the inclusion of a time or counter into the method of generating the DSC. Similarly, the verification of the DSC has a minimum and maximum allowed time or counter for the DSC to be considered valid. To make sure that a DSC cannot be reused, the minimum time or counter is always larger than the previously verified DSC.

The above method poses problems when the DSC is to be used in the context of a Dynamic CVV for payments made through mail, e-mail, fax, telephone or other non-automated channels where the time span from the payment is initiated to the payment is verified and completed may vary for different circumstances or for different payments.

The problem can occur when two Dynamic CVV for two payments are generated in a specific order and verified in the reverse order, due to the differences in processing times between the two payments. In such case, the second Dynamic CVV may be erroneously considered invalid, causing the payment to be declined. There is a need to be able to accept both these transactions independently of their respective processing delays. Further alternative and advantageous solutions would, accordingly, be desirable in the art.

Another problem arises in the case of transactions with extended processing time. To facilitate this process, the time window for validation of the Dynamic CVV has to be extended to reach the longest possible time-frame for a transaction, even if that transaction was started a long time before the verification.

Such an expanded time window causes security implications, because the longer validity time of the response code increases the risk of fraudulent use of the Dynamic CVV. It increases the risk of fraudsters being able to reuse the code for another transaction, especially if the code has fewer digits, or if the time window is large.

Therefore, a technical solution is needed to mitigate this risk of fraudulent use to an acceptable level, and to allow the banks to more confidently accept the purchases US2014/0344153 A1 (RAJ THANIGAIVEL ASHWIN [US] ET AL) 20 November 2014 (2014-11-20) is a patent document from VISA, disclosing a token management system for payment token generation and verification. Tokens are PAN (Primary Account Number) aliases, used instead unique PAN and which are changeable when compromized. The token may be static (long life time, stored in SE) or dynamic (short life time, stored in memory). The token are loaded at personalization or later on the payment device and have an exipry date. The tokens are stored on the payment device to allow for offline transactions. The payment control informations are associated with a payment Amount and the token. The TAN system is commonly known, as shown in the "Transaction authentication number" Wikipedia page, 13 March 2015 (2015-03-13), XP055198196. EP 2 787 474 A2 (GUILLAUD PHILIPPE [US]) 8 October 2014 (2014-10-08) discloses a 3 or 4 digits dCVV (dynamic CVV), displayed on the on back of the payement card and either changing periodically (weeks), or per transaction (OTP) or both. The dCVV is generated dynamically or taken from a prestored list on chip. A time to live (TTL) is considered for the dCVV verification (a time window) to cope with race conditions (different financial transaction times) and multiple values in a range are allowed. The PIN may have to be introduced to display or generate a dCVV.

### SUMMARY OF THE INVENTION

The invention is defined by the independent claims attached. Several examples of implementation are given by the dependent claims.

According to aspects of the present invention, a method to validate a dynamic security code (DSC) generated for a payment transaction comprises the steps of:
- providing for a given payment transaction a dynamic security code (DSC) associated to an identifier of said transaction;
- verifying using a verification memory if the provided dynamic security code (DSC) has already been validated when associated to the same associated identifier;
- if not, verifying the validity of the provided dynamic security code (DSC);
- if the provided dynamic security code is valid, memorizing in the verification memory the provided dynamic security code (DSC), the associated identifier of the payment transaction.

The identifier of the payment transaction can be the amount of said transaction.

The identifier of the payment transaction can also be, alternatively or in complement to the amount, a challenge code.

According to one embodiment, the method comprises a step of approving the payment transaction once the validity of the dynamic security code (DSC) is validated.

According to one embodiment, the method comprises a step of declining the payment transaction applied if another payment transaction has already been approved using the same dynamic security code (DSC) associated to the same transaction identifier.

According to one embodiment, the validated dynamic security codes are stored with their associated payment transaction identifier together and with a date of at which the transaction was initiated.

According to one embodiment, the validated dynamic security codes are stored with their associated payment transaction identifier together with a time counter data associated to or embedded in the dynamic security code (DSC) of the received set of data.

According to one embodiment, a set of data comprising a validated dynamic security codes and an associated payment transaction identifier is removed from the verification memory depending on predefined expiration data such as a cryptographic key, an increasing counter or a data.

According to one embodiment, the step of verifying if a dynamic secure code (DSC) has already been validated is carried out by verifying if said dynamic secure code (DSC) and the associated identifier of the payment transaction are comprised in a verification list memorized in the verification memory.

According to one embodiment, the step of verifying if a dynamic secure code (DSC) has already been validated is carried out by verifying if said dynamic secure code (DSC) and the associated identifier of the payment transaction for less than a predefined time period.

According to one embodiment, the dynamic secure code (DSC) is a Dynamic CVV.

The invention also concerns a dynamic security code (DSC) verification system adapted to implement the method to validate a dynamic security code (DSC).

In one embodiment, the system comprises a DSC generation device and a transaction approval server, wherein the DSC generation device is configured to verify using a verification memory if the provided dynamic security code (DSC) has already been validated when associated to the same associated identifier.

The invention also concerns a computer program for instructing a computer to perform the method to validate a dynamic security code (DSC).

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1A is an example of application of the Dynamic CVV technique in a payment system;
- Figure 1B is a second example of application of the dynamic CVV technique in a payment system in which a user orders a product by phone;
- Figure 2 provides a simplified representation of a method to validate a dynamic security code (DSC) generated for a payment transaction.

### DETAILED DESCRIPTION

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments.

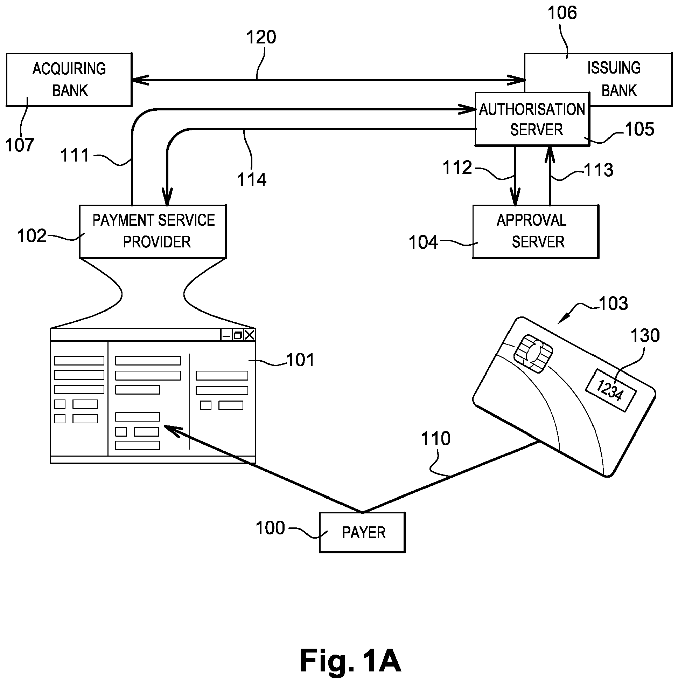

**Figure 1A** is an example of application of the Dynamic CVV technique in a payment system. In this example, a user 100 (also called the payer) wants to buy a product proposed on the web site of an internet merchant. At the time of payment, a payment page 101 invites the user 100 to enter its payment credentials. The required payment credentials correspond for example to a primary account number (PAN) associated to a dCVV value. The dCVV value 130 can be generated by an algorithm implemented on a smartcard 103 attributed to the user 100 by an issuing bank 106. Once entered, a payment service provider 102 sends an authorization request 111 together with the payment credentials to an authorization server 105 handled by the issuing bank 106. Then, the authorization server 105 sends 112 the PAN and the dCVV to an approval server 104. This approval server memorizes a plurality of PAN numbers and is able to generate whenever required a dCVV value for each of them. For a given PAN number, a dCVV value generated by a smartcard and the corresponding dCVV generated by the approval server are matching. The approval server 104 checks that the dCVV is valid that is to say if the one transmitted with the authorization request 111 corresponds to the one generated by the approval server 104. A message 113 is then sent back to the authorization server 105 indicating the result of this comparison. If the two compared dCVV values are matching, the dCVV is validated and the payment transaction can be approved and operated 120 with the acquiring bank 107. A confirmation message 114 can then be sent by the authorization server 105 to the payment service provider 102.

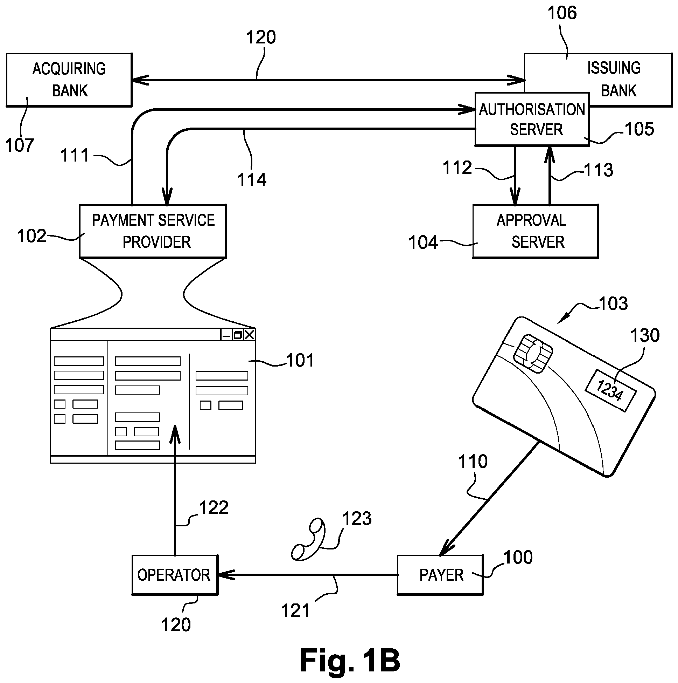

**Figure 1B** is a second example of application of the dynamic CVV technique in a payment system in which a user orders a product by phone. In this example, most of things are similar to what is described with figure 1A except that the payer 100 orders a product by phone 123.

More precisely, the payer 100 orders the product by talking to the phone operator and tells him what he wants, for example a dish to be delivered at his home. As a response, the phone operator tells him the price and asks his card details as well as a security code such as its dCVV. For that purpose, the user/payer uses its card to generate a dCVV value and tells it to the operator.

The security of the Dynamic CVV codes is limited by the constraints on the length of the codes, currently three digits for MasterCard and Visa cards. Banks are looking to deploy display cards with Dynamic CVV to mitigate eCommerce fraud, and at the same time to also support the process for transactions with extended processing time induces for example when using mail and telephone orders.

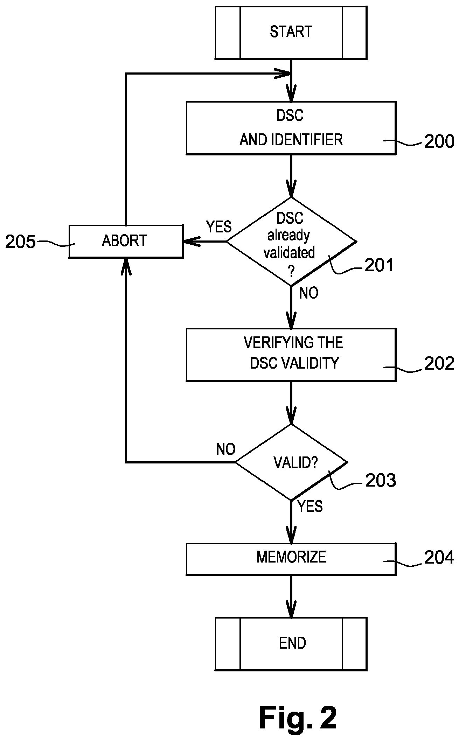

**Figure 2** provides a simplified representation of a method to validate a dynamic security code (DSC) generated for a payment transaction. The proposed method aims at enabling the use of DSC in payment situations where the processing time of the payment may vary depending on circumstances, while keeping the process secure.

The examples provided hereafter are mainly related to on-line card-based payment, but the skilled person will appreciate that the invention can be applied to any kind of payment transaction for which a generated Dynamic Security Code is used for verification.

One advantage of the proposed method is that it allows verifying dynamic security codes (DSC) received in a different order compared to the order they were generated in.

The proposed method for verifying a payment transaction comprises a step of providing 200, for example to an approval server and for a given payment transaction, a DSC associated to an identifier of said transaction. This identifier can be the price of the payment transaction or any other identifier representative of said transaction. According to another aspect of the invention, several different identifiers of a transaction can be associated to the DSC, for example the amount of the transaction and a reference.

Then, it is verified 201 using a verification memory if the provided DSC has already been validated when associated to the same associated identifier. For example, this is carried out by verifying if said DSC and the associated identifier of the payment transaction are comprised in a verification list memorized in the verification memory.

If the provided DSC has not yet been validated when associated to the same transaction identifier, the validity of the provided DSC is verified 202. For that purpose, methods belonging to the state of the art may be used.

For example, an approval server in charge of the DSC validation may recalculate the DSC on its side and compare it with the one provided at step 200. This approval server prepares for example a verification of the DSC by starting from the current time, adjusting it with the historic drift for a specific DSC generation device, and adding a certain positive and negative time margin within which the DSC will be considered valid, forming a range of acceptable DSC, called verification range. Furthermore, that range can be used to check if a DSC similar to the one provided at step 300 has previously been received and verified, constraining such search to DSC within the range.

In this description, a DSC generation device refers to a generally small device, such as a secure element, comprising a memory, a microprocessor and an operating system for computing treatments. Smart cards are portable generation device which can be associated with a screen to display the generated DSC.

According to one aspect of the invention, step 201 which is applied to verify if the provided DSC has previously been verified when associated to the same transaction identifier may consider several DSC memorized in the verification memory within the same range as the range used to accept DSC as described above for step 202.

Depending on the DSC verification scheme, this range may be the counter used for the DSC generation, or the time used as input into the DSC generation, or a set of specific keys used to perform the generation, or some other data which aims to vary the DSC between transactions. This enables the checking if the DSC provided at step 200 has previously been used with the same transaction identification data to only consider an applicable set of historic data, relating to the same set of DSC values that will be considered by the DSC verification scheme. Therefore, the feature reduces the amount of incorrect rejections of DSC values.

In one embodiment, the range of DSC that are considered valid, and therefore are also considered when detecting if the DSC has previously been verified with the identifier of the payment transaction, further takes into consideration the circumstances for the reception of the DSC, such as the type of transaction being performed, the communication method through which the transaction was received or the relative time of when the transaction was received compared to when it was initiated. That is, the range of DSC considered valid is increased when the type of transaction is batch, and decreased when a single transaction is received. Furthermore, the range of DSC considered valid is increased when the communication method of the transaction is a regular file based transmission and decreased when the communication method is a direct Internet-based communication. In addition, the range of DSC considered valid is increased when the time span between the initiation of the transaction at the merchant and the reception of the transaction for verification is long, and decreased when said time span is short. This allows a more accurate prediction of the data used to generate the DSC, and therefore provides the ability to keep the size of the verification range limited. A decrease in the size of the verification range causes an improved robustness against the risk of guessing the correct DSC, because fewer DSC are considered valid by the verification system.

Then, if the DSC provided at step 200 is valid, it is memorized 204 in the verification memory with the identifier of the payment transaction. Therefore, initiating the same payment transaction will be detected as step 201 will also be applied taking into account the already memorised DSC for the same payment transaction (i.e. identified with the same transaction identifier). This may lead for example to the refusal of payment transaction 205 or to a warning message communicated to the issuing bank payment system.

The proposed method uses an identifier associated to a given payment transaction to identify the relationship between a previously verified DSC and the associated transactions on one side, with the DSC and its associated transaction of the provided DSC on the other side. This provides the ability to discriminate between the case where a different payment transaction is being approved with the same DSC value, which is a legitimate case, from the case of an attempted reuse of a DSC value to perform a second transaction, which can be an indication of attempted fraud.

Another advantage of the invention is that the proposed verification scheme allows the same DSC value to be verified and accepted multiple times if it is used for different transactions therefore associated to different transaction identifiers.

The proposed method enables the verification of a set of DSC in a different order compared to the order of which were generated, a property which is not commonly found in present DSC verification systems. This enables the method to be used to verify DSC despite the transport of the DSC from the source of generation to the verification system may take a variable amount of time, causing DSC to arrive at the verification system in a different order compared to when they were generated.

As an example, the DSC can be used in the context of a Dynamic CVV, generated according to one of the well-known DSC standards based on the time of generation, within a payment card. The DSC being displayed on the payment card as a series of digits, which can then be used to authenticate a transaction, for which the payment card will be the form of payment. The DSC is presented together with other details about the payment card to the merchant, where the merchant performs some processing, before sending it to the payment card issuer for verification. The duration of such processing may vary depending on merchant and communication method, which means that two DSC may arrive at the payment card issuer in a different order compared to the order of generation.

According to one aspect of the invention, the DSC is generated based on the amount of the transaction, in such a way that a particular DSC is only valid for a specific amount. Then, the check if the DSC has already been accepted with the same payment transaction identifier is considering the amount of the transaction, making sure that the same DSC cannot be used to transfer the same amount again, although the same DSC may be possible to use to transfer another amount.

Advantageously, generating the DSC based on the amount of the transaction limits the risk of fraudulent use of the DSC to perform a second transaction with the same amount, as an attempt to use the same DSC for a transaction with the same amount indicates that the DSC has been recorded and reused.

This invention also proposes a DSC verification system which is for example a server managed by the issuing bank.

The DSC verification system comprises a verification memory for storing the previously verified DSC for each DSC generation device.

The DSC verification system is adapted to receive the aforementioned DSC and its associated identifier for a payment transaction to be approved comprising.

The verified DSC codes can be stored together with its associated payment transaction identifier in the verification memory. The data used to generate that DSC can also be stored in this memory.

Furthermore, the DSC verification system is configured to generate a set of candidates DSC that are considered valid at the time point in time for a given generation device, with associated data that was used to generate each such DSC.

When a DSC is received for verification in this embodiment, the set of candidate DSC are generated by the DSC verification system, together with the associated data used to generate each candidate. Each such candidate is then compared to the historic data, and each candidate that matches an historic DSC and was also generated with the same input data as the historic DSC is removed from the list of candidates. The DSC that is received for verification is deemed accepted if it is within the resulting set of candidates.

In an alternative embodiment, which is preferable in case the verification system is split into a part for verification and a part for checking if a DSC has already been used, the DSC received for verification is compared to the list of historic DSC, stored in the verification memory, which has at least partly matching data for generating the DSC, and where the historic DSC was generated using data which fall within some predefined criteria in relation to the last known status of the DSC generation device. In case no identical DSC is found within that search, the DSC is progressed to verification, where such verification is done in a way where the same DSC can be accepted multiple times.

In each of the above embodiments, the generation of the DSC candidates is performed in accordance with such processes and methods that are known in the previous arts. In case the DSC candidates are generated based on a counter, index, timestamp or similar, in a preferred embodiment, the range of accepted counters, indices, timestamps, or similar are preferably extended to be longer than usually seen in previous arts, to accommodate for the longer processing times encountered for payments communicated through e-mail, mail, fax or telephone. In previous art a typical processing time from 30 seconds to a couple of minutes is generally recommended. The invention is enabling processing times of several days.

In a further advantageous embodiment, in case the DSC is generated based on a counter derived from a time stamp, the interval in which the counter is increased is further extended compared to what is usually seen in the present art, to adjust the security level of protection against guessing the correct DSC. Current art recommends 30 seconds to 1 minute. The invention is allowing to extend this interval to an hour or longer.

In a further advantageous embodiment, the check if the same DSC with the same data has already been verified is also performed in the DSC generation device, and in case that is the case, a new DSC is generated. This process provides advantage in decreased number of incorrectly rejected DSC, because the generation device will not generate a DSC that will later be rejected by the verification server.

The generation of the DSC candidate list may be done by including a time stamp of counter based on a time stamp in the generation of the DSC. In an alternate embodiment, the DSC candidate list may be done by including a key that is changed based on time, a counter or some other method in the generation of the DSC.

In an alternate embodiment, the method may be split across several server components, for example, where the first server component performs the step to check if the DSC has been validated with the same data before is performed by one component, and the verification of DSC performed by a second component.

In an alternate embodiment, the order of the steps may be reversed, to that the verification of the DSC is performed first, and then the step to check if the DSC has been validated with the same data before is performed afterwards. In such case the DSC is considered valid only if the verification of the DSC is successful and the same DSC has not been used before.

## Claims

1. Method to validate a dynamic security code (DSC) generated for a payment transaction, said method comprising the steps of:
- providing (200) for a given payment transaction a dynamic security code (DSC) associated to an identifier of said transaction;
- verifying (201) using a verification memory if the provided dynamic security code (DSC) has already been validated when associated to the same associated identifier and if yes, refuse (205) the payment transaction;
- if not, verifying (202) the validity of the provided dynamic security code (DSC) by searching the provided dynamic security code (DSC) within a range of acceptable dynamic security codes (DSC);
- if the provided dynamic security code (DSC) is valid, memorizing (204) in the verification memory the provided dynamic security code (DSC), the associated identifier of the payment transaction;
wherein the step of verifying (201) if the provided dynamic security code (DSC) has already been validated when associated to the same associated identifier considers a range of dynamic security codes (DSC) memorized in the verification memory, this range of dynamic security codes (DSC) being the same as the range used in the step of verifying (202) the validity of the provided dynamic security code (DSC);
wherein the range of dynamic security codes (DSC) is a range of dynamic security codes considered valid;
wherein the range of dynamic security codes further takes into consideration circumstances for the reception of the provided dynamic security code, said circumstances including a type of transaction being performed, or a communication method through which the transaction was received;
wherein the range of dynamic security codes considered valid
- is increased when the type of transaction is batch, and decreased when a single transaction is received; or
- is increased when the communication method of the transaction is a regular file based transmission and decreased when the communication method is a direct Internet-based communication.

2. Method according to claim 1, wherein the identifier of the payment transaction is the amount of said transaction.

3. Method according to any of the preceding claims comprising a step of approving the payment transaction once the validity of the dynamic security code (DSC) is validated (202).

4. Method according any of the preceding claims, wherein the validated dynamic security codes are stored with their associated payment transaction identifier together and with a date of at which the transaction was initiated.

5. Method according to any of the preceding claims, wherein the validated dynamic security codes are stored with their associated payment transaction identifier together with a time counter data associated to or embedded in the dynamic security code (DSC) of the received set of data.

6. Method according to any of the preceding claims, wherein a set of data comprising a validated dynamic security codes and an associated payment transaction identifier is removed from the verification memory depending on predefined expiration data such as a cryptographic key, an increasing counter or a data.

7. Method according to any of the preceding claims, wherein the step of verifying (201) if a dynamic secure code (DSC) has already been validated is carried out by verifying if said dynamic secure code (DSC) and the associated identifier of the payment transaction are comprised in a verification list memorized in the verification memory.

8. Method according to any of the preceding claims, wherein the dynamic secure code (DSC) is a Dynamic CVV.

9. A dynamic security code (DSC) verification system adapted to implement the method according to any of the preceding claims.

10. A dynamic security code (DSC) verification system according to claim 9 comprising a DSC generation device and a transaction approval server, wherein the DSC generation device is configured to verify using a verification memory if the provided dynamic security code (DSC) has already been validated when associated to the same associated identifier.

11. A computer program for instructing a computer to perform the method of any of claims 1 to 8.

## Patentansprüche

1. Verfahren zur Validierung eines für Bankgeschäfte erzeugten dynamischen Sicherheitscodes (DSC, dynamic security code), wobei das Verfahren die folgenden Schritte umfasst:
- Bereitstellen (200) eines dynamischen Sicherheitscodes (DSC) für jeweilige Bankgeschäfte, der einer Kennung der Bankgeschäfte zugeordnet ist;
- Verifizieren (201) unter Verwendung eines Verifizierungsspeichers, ob der bereitgestellte dynamische Sicherheitscode (DSC) bereits validiert wurde, als er derselben zugehörigen Kennung zugeordnet war, und wenn ja, Ablehnen (205) der Bankgeschäfte;
- wenn nicht, Verifizieren (202) der Gültigkeit des bereitgestellten dynamischen Sicherheitscodes (DSC) durch Suchen des bereitgestellten dynamischen Sicherheitscodes (DSC) innerhalb eines Bereichs von akzeptablen dynamischen Sicherheitscodes (DSC);
- wenn der bereitgestellte dynamische Sicherheitscode (DSC) gültig ist, Speichern (204) des bereitgestellten dynamischen Sicherheitscodes (DSC) und der zugehörigen Kennung der Bankgeschäfte in dem Verifizierungsspeicher;
wobei der Schritt des Verifizierens (201), ob der bereitgestellte dynamische Sicherheitscode (DSC) bereits validiert wurde, wenn er derselben zugehörigen Kennung zugeordnet ist, einen Bereich von dynamischen Sicherheitscodes (DSC) berücksichtigt, der in dem Verifizierungsspeicher gespeichert ist, wobei dieser Bereich von dynamischen Sicherheitscodes (DSC) derselbe ist wie der Bereich, der in dem Schritt des Verifizierens (202) der Gültigkeit des bereitgestellten dynamischen Sicherheitscodes (DSC) verwendet wird; wobei der Bereich von dynamischen Sicherheitscodes (DSC) ein Bereich von dynamischen Sicherheitscodes ist, die als gültig angesehen werden;
wobei der Bereich der dynamischen Sicherheitscodes ferner die Umstände für den Empfang des bereitgestellten dynamischen Sicherheitscodes berücksichtigt, wobei die Umstände eine Art von Transaktion, die durchgeführt wird, oder ein Kommunikationsverfahren, durch das die Transaktion empfangen wurde, umfassen;
wobei der Bereich der als gültig angesehenen dynamischen Sicherheitscodes
- vergrößert wird, wenn die Art der Transaktion ein Stapel ist, und verkleinert wird, wenn eine einzelne Transaktion empfangen wird; oder
- vergrößert wird, wenn das Kommunikationsverfahren der Transaktion eine reguläre dateibasierte Übertragung ist, und verkleinert wird, wenn das Kommunikationsverfahren eine direkte internetbasierte Kommunikation ist.

2. Verfahren nach Anspruch 1, wobei die Kennung der Bankgeschäfte der Betrag der

3. Verfahren nach einem der vorhergehenden Ansprüche, umfassend einen Schritt des Genehmigens der Bankgeschäfte sobald die Gültigkeit des dynamischen Sicherheitscodes (DSC) validiert (202) ist.

4. Verfahren nach einem der vorhergehenden Ansprüche, wobei die validierten dynamischen Sicherheitscodes zusammen mit ihrer zugehörigen Bankgeschäftskennung und mit einem Datum, an dem die Transaktion initiiert wurde, gespeichert werden.

5. Verfahren nach einem der vorhergehenden Ansprüche, wobei die validierten dynamischen Sicherheitscodes mit ihrer zugehörigen Bankgeschäftskennung zusammen mit einem dem dynamischen Sicherheitscode (DSC) des empfangenen Datensatzes zugeordneten oder darin eingebetteten Zeitzählerdaten gespeichert werden.

6. Verfahren nach einem der vorhergehenden Ansprüche, wobei ein Datensatz, der einen validierten dynamischen Sicherheitscodes und eine zugehörige Bankgeschäftskennung umfasst, in Abhängigkeit von vordefinierten Ablaufdaten wie einem kryptografischen Schlüssel, einem ansteigenden Zähler oder Daten aus dem Verifizierungsspeicher entfernt wird.

7. Verfahren nach einem der vorhergehenden Ansprüche, wobei der Schritt des Verifizierens (201), ob ein dynamischer Sicherheitscode (DSC) bereits validiert wurde, ausgeführt wird, indem verifiziert wird, ob der genannte dynamische Sicherheitscode (DSC) und die zugehörige Bankgeschäftskennung in einer Verifizierungsliste enthalten sind, die im Verifizierungsspeicher gespeichert ist.

8. Verfahren nach einem der vorhergehenden Ansprüche, wobei der dynamische Sicherheitscode (DSC) ein dynamischer CVV ist.

9. Dynamisches Sicherheitscode (DSC)-Verifizierungssystem, das eingerichtet ist, um das Verfahren nach einem der vorhergehenden Ansprüche zu implementieren.

10. Dynamisches Sicherheitscode (DSC)-Verifizierungssystem nach Anspruch 9, umfassend eine DSC-Erzeugungsvorrichtung und einen Transaktionsgenehmigungs-Server, wobei die DSC-Erzeugungsvorrichtung konfiguriert ist, um unter Verwendung eines Verifizierungsspeichers zu verifizieren, ob der bereitgestellte dynamische Sicherheitscode (DSC) bereits validiert wurde, wenn er derselben zugehörigen Kennung zugeordnet ist.

11. Computerprogramm zum Anweisen eines Computers, das Verfahren nach einem der Ansprüche 1 bis 8 durchzuführen.

## Revendications

1. Procédé permettant de valider un code de sécurité dynamique (DSC, dynamic security code) généré pour une transaction de paiement, ledit procédé comprenant les étapes suivantes :
- la fourniture (200) pour une transaction de paiement donnée d'un code de sécurité dynamique (DSC) associé à un identifiant de ladite transaction ;
- la vérification (201) à l'aide d'une mémoire de vérification si le code de sécurité dynamique (DSC) fourni a déjà été validé lorsqu'il est associé au même identifiant associé et si c'est le cas, le refus (205) de la transaction de paiement ;
- la vérification (202) si ce n'est pas le cas de la validité du code de sécurité dynamique (DSC) fourni par recherche du code de sécurité dynamique (DSC) fourni dans une plage de codes de sécurité dynamiques (DSC) acceptables ;
- la mémorisation (204), si le code de sécurité dynamique (DSC) fourni est valide, dans la mémoire de vérification du code de sécurité dynamique (DSC) fourni, de l'identifiant associé de la transaction de paiement ;
dans lequel l'étape de vérification (201) lorsque le code de sécurité dynamique (DSC) fourni a déjà été validé lorsqu'il est associé au même identifiant associé, considère une plage de codes de sécurité dynamiques (DSC) mémorisée dans la mémoire de vérification, ladite plage de codes de sécurité dynamiques (DSC) étant la même que la plage utilisée dans l'étape de vérification (202) de la validité du code de sécurité dynamique (DSC) fourni ;
dans lequel la plage de codes de sécurité dynamiques (DSC) est une plage de codes de sécurité dynamiques considérée comme valide ;
dans lequel la plage de codes de sécurité dynamiques prend en outre en considération des circonstances de la réception du code de sécurité dynamique fourni, lesdites circonstances comprenant un type de transaction en cours d'exécution ou un procédé de communication au moyen duquel la transaction a été reçue ;
dans lequel la plage de codes de sécurité dynamiques considérée comme valide
- est augmentée lorsque le type de transaction est un lot et diminuée lorsqu'une seule transaction est reçue ; ou
- est augmentée lorsque le procédé de communication de la transaction est une transmission régulière basée sur un fichier et diminuée lorsque le procédé de communication est une communication directe basée sur Internet.

2. Procédé selon la revendication 1, dans lequel l'identifiant de la transaction de paiement est le montant de ladite transaction.

3. Procédé selon l'une quelconque des revendications précédentes, comprenant une étape d'approbation de la transaction de paiement une fois que la validité du code de sécurité dynamique (DSC) est validée (202).

4. Procédé selon l'une quelconque des revendications précédentes, dans lequel les codes de sécurité dynamiques validés sont mémorisés conjointement avec leur identifiant de transaction de paiement associé et avec une date à laquelle la transaction a été initiée.

5. Procédé selon l'une quelconque des revendications précédentes, dans lequel les codes de sécurité dynamiques validés sont mémorisés avec leur identifiant de transaction de paiement associé conjointement avec des données de compteur de temps associées ou incorporées dans le code de sécurité dynamique (DSC) de l'ensemble de données reçu.

6. Procédé selon l'une quelconque des revendications précédentes, dans lequel un ensemble de données comprenant un code de sécurité dynamique validé et un identifiant de transaction de paiement associé est supprimé de la mémoire de vérification en fonction des données d'expiration prédéfinies telles qu'une clé cryptographique, un compteur croissant ou des données.

7. Procédé selon l'une quelconque des revendications précédentes, dans lequel l'étape de vérification (201), lorsqu'un code sécurisé dynamique (DSC) a déjà été validé, est effectuée par vérification si ledit code sécurisé dynamique (DSC) et l'identifiant associé de la transaction de paiement sont compris dans une liste de vérification mémorisée dans la mémoire de vérification.

8. Procédé selon l'une quelconque des revendications précédentes, dans lequel le code sécurisé dynamique (DSC) est un CVV dynamique.

9. Système de vérification de code de sécurité dynamique (DSC) apte à la mise en oeuvre du procédé selon l'une quelconque des revendications précédentes.

10. Système de vérification de code de sécurité dynamique (DSC) selon la revendication 9 comprenant un dispositif de génération de DSC et un serveur d'approbation de transaction, dans lequel le dispositif de génération de DSC est configuré pour vérifier à l'aide d'une mémoire de vérification si le code de sécurité dynamique (DSC) fourni a déjà été validé lorsqu'il est associé au même identifiant associé.

11. Programme informatique destiné à la demande à un ordinateur de mettre en oeuvre le procédé selon l'une quelconque des revendications 1 à 8.
